Europäisches Patentamt

European Patent Office

Office européen des brevets

(19)

(11) Numéro de publication: **0 057 708**
**B1**

(12) **FASCICULE DE BREVET EUROPEEN**

(45) Date de publication du fascicule du brevet:
**30.05.84**

(51) Int. Cl.³: **E 02 B 3/22**

(21) Numéro de dépôt: **81902271.6**

(22) Date de dépôt: **07.08.81**

(86) Numéro de dépôt international:
**PCT/FR 81/00096**

(87) Numéro de publication internationale:
**WO 82/00670 (04.03.82 Gazette 82/7)**

(54) **DISPOSITIF POUR AMORTIR LES FROTTEMENTS DES NAVIRES CONTRE LES QUAIS.**

(30) Priorité: **14.08.80 FR 8018087**

(43) Date de publication de la demande:
**18.08.82 Bulletin 82/33**

(45) Mention de la délivrance du brevet:
**30.05.84 Bulletin 84/22**

(84) Etats contractants désignés:
**AT CH DE FR GB LI LU NL SE**

(56) Documents cités:
**DE - A - 2 032 843**
**DE - C - 952 688**
**FR - A - 2 020 436**
**US - A - 3 455 269**
**US - A - 3 799 098**
**US - A - 3 951 384**

(73) Titulaire: **COMTE, Robert, Cité Jardin, Toga,**
**F-20200 Bastia (FR)**

(72) Inventeur: **COMTE, Robert, Cité Jardin, Toga,**
**F-20200 Bastia (FR)**

(74) Mandataire: **Bouju, André, 38 Avenue de la Grande**
**Armée, F-75017 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

# Description

La présente invention concerne un dispositif pour amortir les frottements des navires contre les quais, ce dispositif comportant une série de pneumatiques usagés qui sont remplis d'une matière élastique et de faible densité, et sont disposés les uns contre les autres autour d'un corps allongé destiné à être placé sensiblement horizontalement en regard du quai, la partie des pneumatiques adjacente au corps allongé étant fermée de façon sensiblement étanche par une bague souple en contract avec ce corps allongé, lequel est fermé à ses extrémités par des flasques qui sont en saillie par rapport à sa surface extérieure et qui maintiennent l'ensemble des pneumatiques serrés les uns contre les autres.

On connaît (demande de brevet en R.F.A. publiée sous la référence DE-OS 2032843) un dispositif de ce genre dans lequel le corps allongé, autour duquel sont disposés des pneumatiques remplis d'une matière expansée («mousse») résistant à l'eau de mer, est constitué par une poutre. Dans la description de cette demande de brevet antérieure, cette poutre possède une section sensiblement rectangulaire d'où il résulte l'impossibilité de réaliser un contact intime et uniforme entre les pneumatiques et la surface extérieure de la poutre. Les pneumatiques ont donc tendance à se déplacer sur cette poutre, les uns par rapport aux autres, ce qui est une occasion de frottements générateurs d'une rapide détérioration du dispositif.

Par la demande de brevet français 2 020 436 (N° d'enregistrement 69 34827), on connaît un dispositif de protection comportant des éléments de forme annulaire entourant une partie interne de forme allongée comportant un corps gonflable souple, à peu près cylindrique, qui – lorsqu'il est gonflé – supporte les éléments externes disposés côte-à-côte. A ses deux extrémités, le corps interne allongé présente des parties périphériques à diamètre agrandi qui assument le rôle des flasques mentionnés plus haut. Les éléments annulaires peuvent être constitués par des pneumatiques usagés. Pour conférer une solidité accrue à ce dispositif, ce dernier peut comporter une rainure centrale de forme tubulaire destinée à une tige, à une corde ou à un élément analogue. En outre, les éléments annulaires externes peuvent être reliés entre eux au moyen d'un certain nombre d'éléments de tension qui sont souples, s'étendant dans le sens longitudinal et son fixés chacun aux éléments de forme annulaire les plus proches des extrémités du dispositif. La fabrication d'un tel dispositif est compliquée, du fait de la nécessité de recourir à un corps central allongé gonflable, devant avoir un profil renflé à ses extrémités. De plus, par construction, ce dispositif est du type flottant et se prête mal a une utilisation en immersion totale, ce qui le rend inapte à la protection du renflement immergé de la proue des navires que l'on appelle généralement «bulb». Ce dispositif assure certes un contact intime et uniforme entre les éléments annulaires (constitués par exemple par des pneumatiques) et la surface extérieure du corps allongé, mais cela seulement tant que ce dernier reste en condition de gonflage convenable. Or cette dernière peut toujours être compromise sous l'effet des importantes agressions mécaniques auxquelles le dispositif peut être soumis.

Par le brevet n° 3 799 098 aux U.S.A., on connaît un dispositif susceptible d'être utilisé tantôt comme ancre, tantôt comme «défense» pour un bateau de petit tonnage, tel qu'un canot. Ce dispositif comporte des éléments cylindriques, éventuellement sous forme de tronçons de tube remplis de ciment, qui sont montés à la façon d'entretoises entre des plaques rectangulaires dont le pourtour est en saillie. Ce sont ces plaques qui, lors de l'utilisation en tant que dispositif de protection de la coque du bateau, «encaissent», par leur tranche, les sollicitations mécaniques développées entre coque de l'embarcation et quai. Il est manifeste qu'un tel dispositif ne peut pas être utilisé valablement pour amortir les frottements de la coque des grands navires contre les quais des ports.

La présente invention a pour but de remédier aux inconvénients précités en conférant à un dispositif du genre mentionné au début, des caractéristiques qui le rendent à la fois fiable, efficace et peu onéreux.

Selon l'invention, ce but est atteint, avec un dispositif du genre indiqué au début, par le fait que le corps allongé est constitué par un tube cylindrique métallique rempli de béton allégé par des charges de faible densité.

L'utilisation d'un tube cylindrique permet d'obtenir un contact parfait entre les pneumatiques et la surface extérieure de ce tube. Ce contact parfait, combiné avec le fait que les pneumatiques sont serrés les uns contre les autres entre les flasques d'extrémité du tube, évite tout déplacement et frottement nuisibles de ces pneumatiques susceptibles d'abréger la durée de vie du dispositif.

Par ailleurs, du fait qu'il est possible de réaliser un excellent contact entre ces pneumatiques et la surface extérieure du tube, il est possible d'obtenir une excellente étanchéité entre cette surface et l'intérieur des pneumatiques. Ces derniers peuvent ainsi être remplis par une matière appropriée permettant d'obtenir l'effet d'amortissement désiré.

De plus, le fait que le tube cylindrique soit rempli de béton léger, non seulement rend ce tube indéformable, ce qui est essentiel pour pouvoir maintenir un parfait contact entre les pneumatiques et le tube mais permet aussi d'adapter le dispositif aux conditions de flottabilité désirées.

Selon une version avantageuse de l'invention, le tube métallique est rempli de béton chargé de grains d'une matière choisie dans le groupe suivant: pierre ponce, polystyrène expansé, déchets de caoutchouc, billes de verre expansé.

Selon une version préférée de l'invention, les pneumatiques sont remplis de copeaux ou de poudre de caoutchouc, provenant également de pneumatiques usagés.

Ces copeaux ou cette poudre de caoutchouc peuvent être liés ensemble par une colle résistant à l'eau de mer, telle qu'une colle époxy ou polyuréthane.

On peut également injecter à l'intérieur des pneumatiques remplis ou non de copeaux ou de poudre de caoutchouc une mousse synthétique résistant à l'eau de mer, cette mousse ayant pour effet lors de son expansion à l'intérieur des pneumatiques de serrer ces derniers les uns contre les autres et contre les flasques d'extrémité du tube.

On peut également injecter à l'intérieur des pneumatiques remplis de copeaux ou de poudre de caoutchouc, de l'air à une pression suffisante pour serrer les pneumatiques les uns contre les autres et contre les flasques d'extrémité du tube.

D'autre particularités et avantages de l'invention apparaîtront encore dans la description ci-après,

Aux dessins annexés, donnés à titre d'exemples non limitatifs:

– la figure 1 est une vue en coupe longitudinale d'un dispositif conforme à l'invention fixé à un quai;

– la figure 2 est une vue latérale du dispositif, selon la figure 1;

– la figure 3 est une vue en coupe longitudinale partielle et à plus grande échelle du dispositif;

– la figure 4 est une vue analogue à la figure 1, montrant deux ensembles tube-pneumatiques superposés;

– la figure 5 est une vue latérale du dispositif selon la figure 4;

– la figure 6 est une vue schématique, d'un dispositif immergé à trois ensembles tube-pneumatiques disposés en regard du renflement de la proue d'un navire;

– la figure 7 est une vue en plan d'un dispositif adapté à l'angle saillant d'un quai.

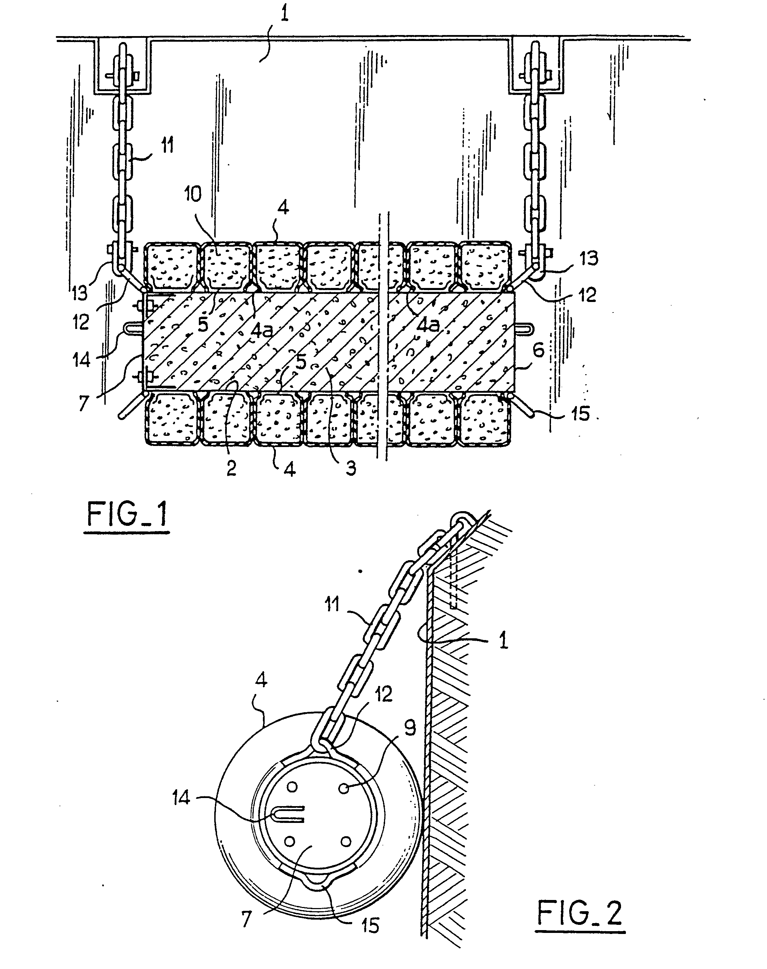

Dans la réalisation des figures 1 et 2, le dispositif de défense fixé contre le flanc d'un quai 1 comprend un tube cylindrique 2, par exemple en tôle d'acier, s'étendant horizontalement et rempli de béton léger 3.

Ce tube 2 est protégé extérieurement par un enduit anti-corrosion par exemple à base de bitume ou de résine époxy, ou par métallisation (Zn-Al).

Le béton léger 3 est rempli de charges de faible densité, telles que les grains de pierre ponce, des particules de polystyrène expansé, des copeaux de caoutchouc, des billes de verre expansé etc. Ces charges en allégeant le béton facilitent la manutention du dispositif et confèrent à celui-ci les qualités de flottabilité désirée. Autour du tube métallique 2, sont disposés des pneumatiques usagés de camion 4 présentant par exemple un diamètre extérieur de 1 m environ. Ces pneumatiques 4 sont remplis d'une matière élastique de faible densité que l'on détaillera plus loin.

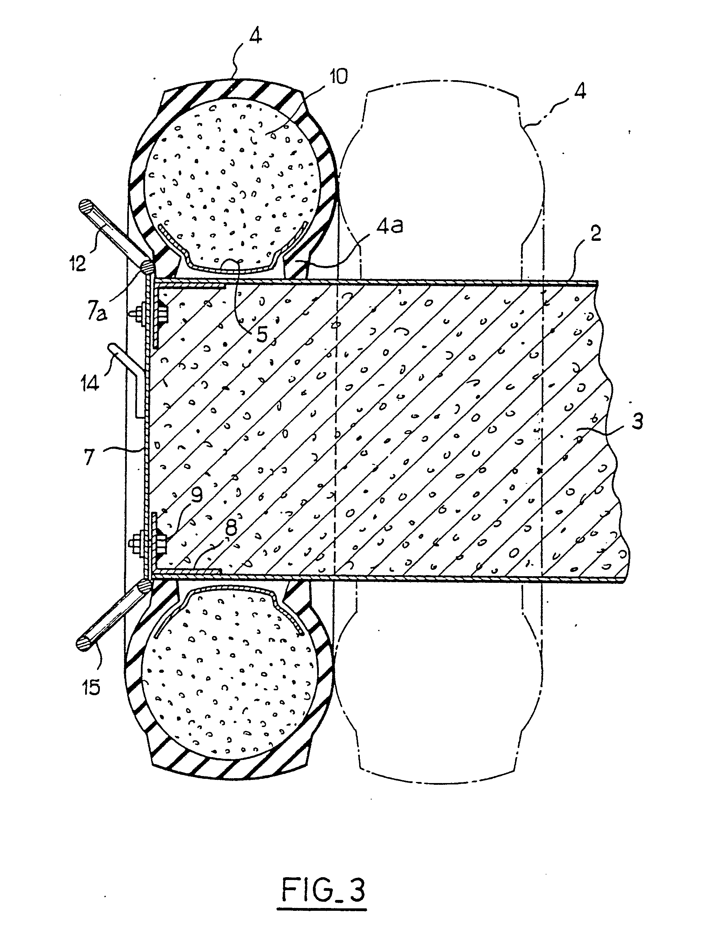

La partie 4a des pneumatiques 4 adjacente au tube métallique 2 est en contact intime avec la surface extérieure cylindrique de ce tube. Cette partie 4a des pneumatiques 4 est fermée de façon étanche par une bague souple 5 en contact avec la surface extérieure du tube 2. Ces bagues 5 sont constituées de préférence par les flapes en caoutchouc qui sont disposées normalement en contact avec la jante d'un pneumatique de camion pour protéger la chambre à air. Ces bagues 5 prennent appui intérieurement sur les bords 4a des pneumatiques, comme on le voit en détail sur la figure 3.

Le tube métallique 2 est fermé à ses extrémités par les flasques métalliques 6, 7 ayant une couronne périphérique 7a en saillie par rapport à la surface extérieure du tube 2. Les couronnes 7a constituent des butées pour les pneumatiques 4 en préservant les flancs de ces derniers.

Le flasque 6 est soudé sur l'extrémité du tube, tandis que le flasque 7 est fixé sur ce dernier, de façon amovible au moyen de cornières 8 et de boulons 9.

Dans un exemple de réalisation, la matière élastique 10 qui remplit les pneumatiques 4 est constituée par des copeaux ou de la poudre de caoutchouc provenant de pneumatiques usagés.

Grâce à l'étanchéité réalisée entre les pneumatiques 4 et la surface extérieure du tube 2, ces copeaux ou poudre ne risquent pas de s'échapper à l'extérieur. Ces copeaux ou cette poudre peuvent éventuellement être liés par une colle résistant à l'eau de mer, par exemple à base de latex ou de polyuréthane. Cette colle non seulement permet d'obtenir les propriétés élastiques et l'effet d'amortissement recherchés, mais assure aussi une étanchéité parfaite de l'intérieur des pneumatiques, en supprimant en particulier les éventuels pores de ces derniers.

Les pneumatiques 4 peuvent également être remplis par une mousse synthétique résistant à l'eau de mer, telle qu'une mousse élastique d'époxyde ou de polyuréthane, injectée sous pression dans les pneumatiques. L'expansion de la mousse réalisée in-situ dans les pneumatique 4 permet de dilater les pneumatiques, en les serrant les uns contre les autres, et contre les couronnes périphériques 7a. Cette expansion de la mousse a également pour effet d'appliquer les bagues 5 contre la surface du tube 2, en assurant ainsi une excellente étanchéité. Le serrage des pneumatiques 4 les uns contre les autres et contre les couronnes périphériques 7a permet d'éviter que ces pneumatiques se déplacent les uns par rapport aux autres, en engendrant des frottements susceptibles de détériorer ces derniers, ainsi que le revêtement anti-corrosion du tube 2.

Par ailleurs, on peut également injecter dans les pneumatiques remplis de copeaux ou de poudre de caoutchouc éventuellement liés par une colle, de l'air sous une pression pouvant atteindre 7 kg/cm² environ.

La mousse expansée peut également être introduite dans les pneumatiques 4 déjà remplis partiellement de copeaux ou de poudre de caoutchouc.

Dans tous les cas, le matériau élastique présent à l'intérieur des pneumatiques 4, confère au dispositif un excellent pouvoir d'amortissement à l'égard des frottements et des chocs exercés par les navires.

Le dispositif conforme à l'invention est fixé dans une position horizontale grâce à deux chaînes d'arrimage 11 accrochées au bord du quai 1 et à des anneaux 12 soudés sur le bord des flasques d'extrémité 6, 7 du tube métallique 2 (voir figures 1, 2 et 3).

Ces anneaux 12 sont obliques par rapport aux flasques 6, 7 de manière à maintenir les manilles 13 des chaînes 11 écartées des pneumatiques 4 adjacents et éviter tout contact avec ces derniers susceptibles de les détériorer. Ces manilles 13 peuvent éventuellement être couvertes par un manchon de protection en caoutchouc (non représenté) pour éviter tout contact direct entre ces manilles 13 et les pneumatiques 4, en cas de déplacement latéral du dispositif sous l'effet de la houle ou lors de l'accostage d'un navire.

Par ailleurs, chacun des flasques 6, 7 comporte un anneau 14 disposé à 90° de l'anneau 12 et dirigé vers l'avant. Cet anneau 14 sert à la manutention du dispositif, par exemple au moyen d'une grue. L'emplacement des anneaux 12 et 14 est choisi de façon que ces derniers viennent par le simple jeu de la pesanteur se présenter en alignement avec les épingles d'accrochage scellées sur le quai 1, ce qui simplifie les opérations de mise en place et d'enlèvement du dispositif.

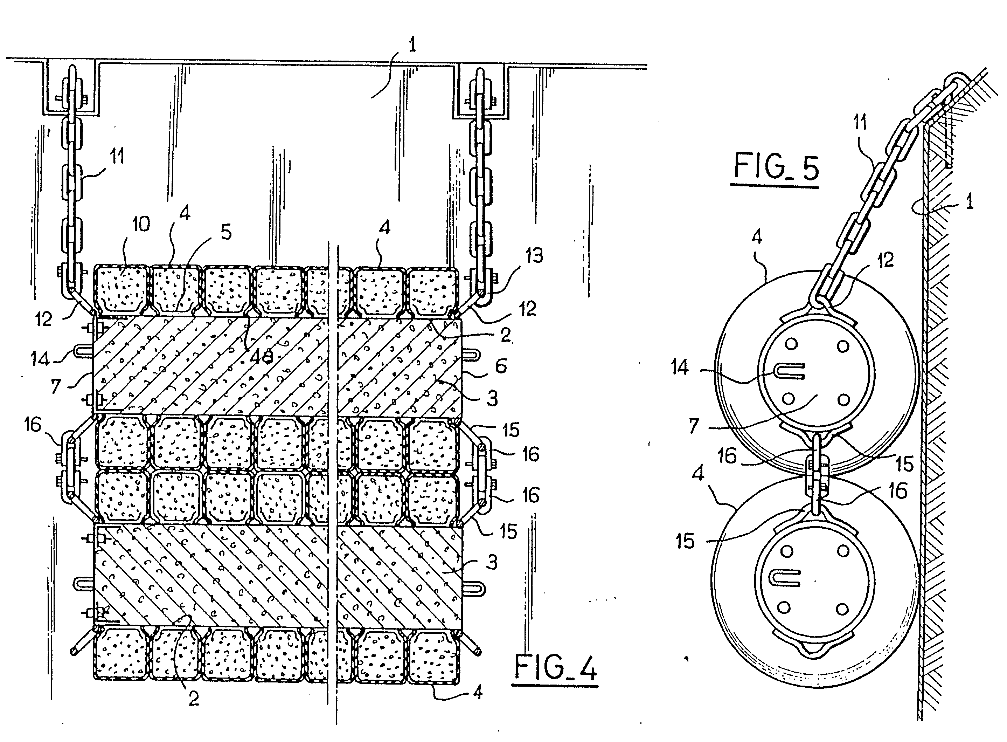

Dans la réalisation des figures 4 et 5, le dispositif conforme à l'invention comprend deux ensembles tube-pneumatiques disposés l'un au-dessus de l'autre, les pneumatiques 4 de ces deux ensembles étant en contact mutuel. Les deux ensembles sont reliés l'un à l'autre par des anneaux 15 fixés aux flasques 6, 7 symétriquement par rapport aux anneaux d'arrimage 12. Ces anneaux 15 sont rendus solidaires entre eux par des manilles 16.

Grâce à cette disposition, le dispositif protège la coque des navires, même en cas de variations du niveau de l'eau dues aux marées.

Bien entendu, en fonction de l'amplitude des marées, le dispositif peut comporter plus de deux ensembles tube-pneumatiques.

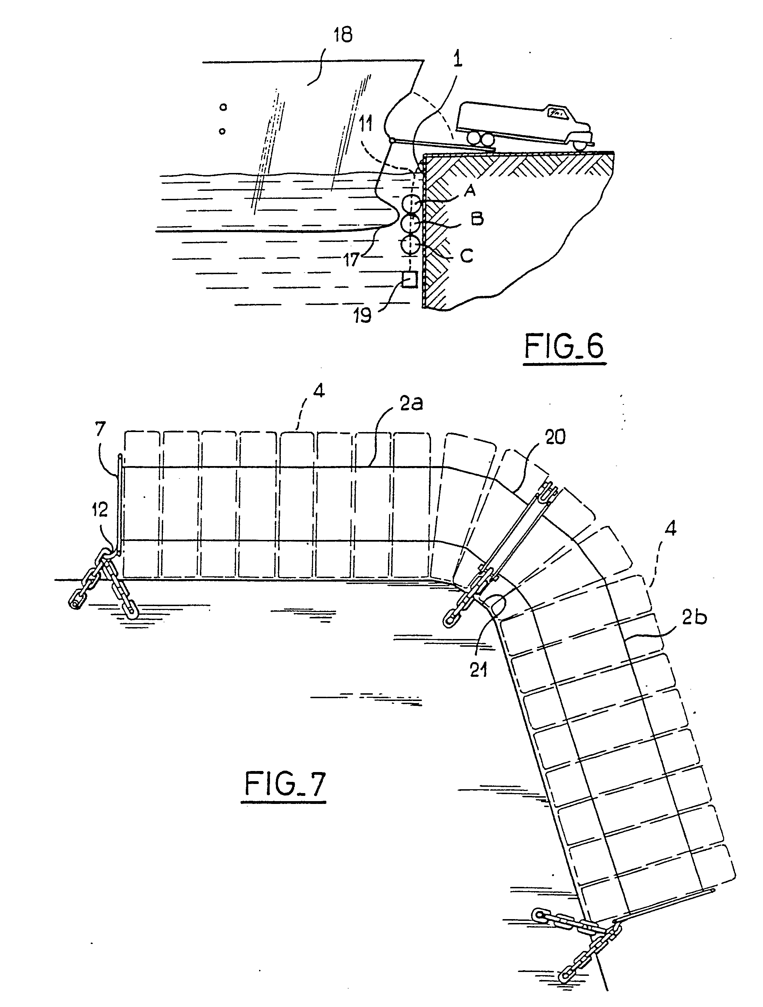

Ainsi le dispositif peut comporter trois ensembles étagés A, B, C comme indiqué sur la figure 6. Un tel dispositif étagé assure non seulement une protection en cas d'importantes variations du niveau d'eau, mais protège aussi le renflement immergé 17 appelé «bulb» ménagé sur la proue d'un navire 18 se présentant en regard du quai 1.

Dans le cas d'un tel dispositif, il est avantageux de lester l'ensemble par un bloc 19 en béton ou en métal. Ce bloc 19 peut éventuellement reposer sur le fond.

Dans la réalisation de la figure 7, le dispositif comprend deux éléments de tube 2a, 2b, raccordés ensemble par une partie tubulaire intermédiaire 20 recourbée. Le dispositif s'adapte ainsi à l'angle saillant 21, l'ensemble étant arrimé par des chaînes en trois points situés respectivement aux extrémités libres des éléments 2a, 2b et au niveau de la partie intermédiaire 20.

Bien entendu, il est possible de concevoir un dispositif analogue pouvant s'adapter à l'angle rentrant d'un quai.

Les divers exemples de dispositifs de défense de quai que l'on vient de décrire sont ainsi adaptés aux différentes conditions qui peuvent se présenter. Dans tous les cas, ces dispositifs assurent un amortissement efficace des frottements des coques de navires. De plus, ces dispositifs présentent à l'état immergé, une durée de vie très importante. Par ailleurs, ces dispositifs sont peu onéreux, car une partie importante de ceux-ci est réalisée à partir de produits usagés (non détruits), ce qui valorise ces derniers.

**Revendications**

1. Dispositif pour amortir les frottements des navires contre les quais, comprenant une série de pneumatiques usagés (4) qui sont remplis d'une matière (10) élastique et de faible densité et sont disposés les uns contre les autres autour d'un corps allongé destiné à être placé sensiblement horizontalement en regard du quai, la partie (4a) des pneumatiques (4) adjacente au corps allongé étant fermée de façon sensiblement étanche par une bague souple (5) en contact avec le corps allongé lequel est fermé à ses extrémités par des flasques (6, 7) qui sont en saillie par rapport à sa surface extérieure et qui maintiennent l'ensemble des pneumatiques (4) serrés les uns contre les autres, ce dispositif étant caractérisé en ce que le corps allongé est constitué par un tube cylindrique métallique (2) rempli de béton (3) allégé par des charges de faible densité.

2. Dispositif conforme à la revendication 1, caractérisé en ce que le tube métallique (2) est rempli de béton (3) chargé de grains d'une matière choisie dans le groupe suivant: pierre ponce, polystyrène expansé, copeaux de caoutchouc, et billes de verre expansé.

3. Dispositif conforme à l'une quelconque des revendications 1 ou 2, caractérisé en ce que les pneumatiques (4) sont remplis de copeaux ou de poudre de caoutchouc.

4. Dispositif conforme à l'une quelconque des revendications 1 à 3, caractérisé en ce que les pneumatiques (4) sont remplis de copeaux ou de poudre de caoutchouc liés par une colle résistant à l'eau de mer.

5. Dispositif conforme à l'une quelconque des revendications 1 à 3, caractérisé en ce que les pneumatiques (4) sont remplis sous pression, par une mousse synthétique résistant à l'eau de mer, la pression de la mousse étant suffisante pour serrer les pneumatiques les uns contre les autres et contre les flasques d'extrémité du tube.

6. Dispositif conforme à l'une quelconque des revendications 3 ou 4, caractérisé en ce que les pneumatiques (4) sont en outre remplis d'air à une pression suffisante pour les serrer les uns contre les autres et contre les flasques d'extrémité du tube (2).

7. Dispositif conforme à l'une quelconque des revendications 1 à 6, caractérisé en ce que l'un (7) des flasques d'extrémité est fixé de façon amovible au tube métallique (2).

8. Dispositif conforme à l'une quelconque des revendications 1 à 7, caractérisé en ce que les flasques (6, 7) comportent chacun au moins un anneau (12) pour permettre la fixation du dispositif au moyen de chaînes (11) au bord du quai (1).

9. Dispositif conforme à la revendication 8, caractérisé en ce que chacun des flasques (6, 7) comporte un anneau de manutention (14) disposé sensiblement à 90° de l'anneau précité (12).

10. Dispositif conforme à l'une quelconque des revendications 1 à 9, caractérisé en ce qu'il comprend plusieurs ensembles tube-pneumatiques disposés les uns au-dessus des autres et reliés ensemble par des anneaux (15) portés par les flasques d'extrémité (6, 7).

11. Dispositif conforme à l'une quelconque des revendications 1 à 10, caractérisé en ce qu'il comprend deux éléments de tube (2a, 2b) raccordés par une partie tubulaire courbe (20) pour permettre à l'ensemble de s'adapter à l'angle (21) d'un quai.

## Patentansprüche

1. Vorrichtung zum Dämpfen der Reibungen eines Schiffes gegen Kais, bestehend aus einer Reihe von gebrauchten Reifen (4), die mit einem elastischen Material (10) von geringer Dichte gefüllt und nebeneinander um einen länglichen Körper angeordnet sind, der dazu bestimmt ist, im wesentlichen horizontal zum Kai plaziert zu werden, wobei der an dem länglichen Körper anliegende Teil (4a) der Reifen (4) durch einen mit dem länglichen Körper in Verbindung stehenden, weichen Dichtungsring (5) dicht verschlossen ist und der längliche Körper seinerseits an seinen Enden durch Flansche (6, 7) verschlossen ist, die über seine Aussenfläche überstehen und die die Einheit aus gegeneinandergedrückten Reifen (4) zusammenhalten, dadurch gekennzeichnet, dass der längliche Körper durch ein zylindrisches Metallrohr (2) gebildet ist, das mit Beton (3) gefüllt ist, der seinerseits durch Füllungen geringer Dichte verdünnt ist.

2. Vorrichtung nach Anspruch 1, dadurch gekennzeichnet, dass das Metallrohr (2) mit Beton (3) gefüllt ist, welchem Körner eines Materials folgender Gruppe zugesetzt sind: Bimsstein, expandiertes Polystyren, Gummispäne und Kugeln aus expandiertem Glas.

3. Vorrichtung nach einem der Ansprüche 1 oder 2, dadurch gekennzeichnet, dass die Reifen (4) mit Gummispänen oder -pulver gefüllt sind.

4. Vorrichtung nach einem der Ansprüche 1 bis 3, dadurch gekennzeichnet, dass die Reifen (4) mit Gummispänen oder -pulver gefüllt sind, die durch einen meerwasserresistenten Kleber miteinander verbunden sind.

5. Vorrichtung nach einem der Ansprüche 1 bis 3, dadurch gekennzeichnet, dass die Reifen (4) unter Druck mit einem meerwasserresistenten Kunststoff gefüllt sind, wobei der Druck des Kunststoffes ausreicht, um die Reifen gegeneinander und gegen die Endflansche des Rohres zu drücken.

6. Vorrichtung nach einem der Ansprüche 3 oder 4, dadurch gekennzeichnet, dass die Reifen (4) ausserdem mit Luft von genügendem Druck gefüllt sind, um sie gegeneinander und gegen die Endflanschen des Rohres (2) zu drücken.

7. Vorrichtung nach einem der Ansprüche 1 bis 6, dadurch gekennzeichnet, dass einer (17) der Endflansche abnehmbar am Metallrohr (2) angebracht ist.

8. Vorrichtung nach einem der Ansprüche 1 bis 7, dadurch gekennzeichnet, dass die Flansche (6, 7) jeweils zumindest einen Ring (12) aufweisen, um die Befestigung der Vorrichtung mittels Ketten (11) am Rand des Kais (1) zu ermöglichen.

9. Vorrichtung nach Anspruch 8, dadurch gekennzeichnet, dass jeder der Flansche (6, 7) einen Handhabungshaken (14) aufweist, der im wesentlichen in einem Winkel von 90° zu dem vorgenannten Ring (12) angebracht ist.

10. Vorrichtung nach einem der Ansprüche 1 bis 9, dadurch gekennzeichnet, dass sie mehrere Einheiten von Rohr und Reifen aufweist, welche übereinander angeordnet und durch an den Endflanschen (6, 7) angebrachte Ringe (15) miteinander verbunden sind.

11. Vorrichtung nach einem der Ansprüche 1 bis 10, dadurch gekennzeichnet, dass sie zwei Rohrelemente (2a, 2b) aufweist, die durch ein gebogenes Rohrteil (20) miteinander verbunden sind, um die Anpassung der Vorrichtung an den Winkel (21) eines Kais zu ermöglichen.

## Claims

1. A device for amortizing friction between ships and quay walls, comprising a series of worn pneumatic tyres (4) which are filled with a low density elastic material (10) and disposed against one another on an elongate body intended to be positioned substantially horizontally with respect to the quay wall, the parts (4a) of the tyres (4) adjacent to the elongate body being closed off in a substantially water-tight manner by a flexible ring (5) in contact with the elongate body, which is closed off at its ends by plates (6, 7) which project with respect to its outer surface and hold the assembly of tyres (4) pressed against one another, characterised in that the elongate body consists of a metal cylindrical tube (2) filled with concrete (3) lightened by low density fillers.

2. A device according to claim 1, characterised in that the metal tube (2) is filled with concrete (3) comprising particles of a material selected from the following group: pumice, expanded polystyrene, rubber shavings and balls of expanded glass.

3. A device according to claim 1 or 2, characterised in that the the tyres (4) are filled with rubber shavings or powder.

4. A device according to any of claims 1 to 3, characterised in that the tyres (4) are filled with rubber shavings or powder bonded by an adhesive resistant to sea-water.

5. A device according to any of claims 1 to 3, characterised in that the tyres (4) are filled under pressure with a synthetic foam resistant to sea-water, the pressure of the foam being sufficient to press the pneumatic tyres against one another and against the tube end plates.

6. A device according to any of claims 3 or 4, characterised in that the pneumatic tyres (4) are also filled with air at a pressure sufficient to press them against one another and against the end plates of the tube (2).

7. A device according to any of claims 1 to 6, characterised in that one (7) of the end plates is secured in a detachable manner to the metal tube (2).

8. A device according to any of claims 1 to 7, characterised in that the plates (6, 7) each comprise at least one ring (12) so that the device can be secured to the edge of the quay wall (1) by means of chains (11).

9. A device according to claim 8, characterised in that each of the plates (6, 7) comprises a handling ring (14) disposed at substantially 90° from the above-mentioned ring (12).

10. A device according to any of claims 1 to 9, characterised in that it comprises several tube-tyre assemblies positioned one over another and connected together by rings (15) carried by the end plates (6, 7).

11. A device according to any claims 1 to 10, characterised in that it consists of two tube components (2a, 2b) connected by means of a curved tubular portion (20) so that the assembley can be suited to the angle (21) of a quay wall.

0 057 708

FIG_1

FIG_2

7

FIG_3

FIG_4

FIG_5

0 057 708

0 057 708

FIG_6

FIG_7

13